# EUROPEAN PATENT SPECIFICATION

(11) **EP 3 316 724 B1**
(45) Date of publication and mention of the grant of the patent: **11.09.2019**
(21) Application number: 16825121.3
(22) Date of filing: 13.07.2016
(51) Int. Cl.: B29C 43/14, B29C 43/02, A44C 9/00, B29K 83/00, A44C 27/00, B29C 43/20, C08L 83/04, B29L 31/00

(54) **COMPRESSION MOLDING A SILICONE RING**
FORMPRESSEN EINES SILIKONRINGS
MOULAGE PAR COMPRESSION D'UN ANNEAU EN SILICONE

(30) Priority: 14.07.2015 US 201514798871
(43) Date of publication of application: 09.05.2018
(73) Proprietor: Qalo LLC, Los Angeles, CA 90036 (US)
(72) Inventor: BAKER, Patrick, Los Angeles, CA 90036 (US); HOLIDAY, Kyle, Los Angeles, CA 90036 (US)
(74) Representative: Hocking, Adrian Niall
(86) International application number: PCT/US2016/042121
(87) International publication number: WO 2017/011571

(56) References cited:
- GB-A- 2 083 575
- US-A- 2 686 554
- US-A- 2 893 058
- US-A- 4 410 478
- US-A1- 2010 192 955
- US-A1- 2010 312 276
- US-A1- 2011 289 966
- US-A1- 2012 118 016
- US-A1- 2012 148 655
- US-A1- 2013 091 895
- QALO LLC.;: 'Men's Thin Red Line Silicone Ring;' 08 April 2015, pages 1 - 4, XP055508574 Retrieved from the Internet: <URL:https://web.archive.org/web/2015040803 5026/http:/qalo.com/collections/thin-line/p roducts/men s-thin-line-collection> [retrieved on 2016-09-14]

## Description

### TECHNICAL FIELD

Certain aspects of the disclosure relate to a method of manufacturing a silicone ring. In particular, the disclosure relates to the manufacture of a ring composed of three components that form a thin-line segment around the entire circumference of the ring.

### BACKGROUND

Wedding rings or wedding bands have customarily been worn by both men and women throughout history. The ring is normally worn on the base of the left or right "ring" finger. One possible reason the "ring" or fourth finger on the left hand is the chosen location for wearing a ring is that the likelihood of injury is minimized. Humans are predominately right handed and wearing a wedding ring on the left hand on the fourth finger likely results in a decreased amount of injuries and less wear and tear on the ring itself. Typically, wedding rings are made of precious metals such as gold, silver, palladium, and platinum. Other examples include those rings made out of titanium, tungsten, ceramic, etc. Certain occupations and active lifestyles are not conducive to the wearing of a wedding band. Serious injury can result to the finger and hand if a conventional wedding ring gets caught on an object. Many individuals remove their rings for safekeeping, only to find that after completing work or other activity the ring has been misplaced, lost, or even stolen. The current disclosure describes a silicone ring and the process of making the silicone ring as a viable replacement to conventional wedding bands.

To alleviate the hazards and risks associated with the wearing of a conventional wedding band, a ring manufactured by silicone compression-molding virtually eliminates all potential risks of injury to the hand and finger. The silicone ring also provides a cost effective alternative to those who desire to wear a wedding ring continuously and a ring that will not interfere with an active lifestyle. Silicone rubber is widely known to be resistant to extreme temperatures, is resistant to abrasions, is resistant to chemicals, is resistant to weather, is hypoallergenic, is comfortable to wear, and is less harmful to the environment than many organic rubbers.

Conventional methods of compression molding, for instance that disclosed in GB2083575A, can produce various flaws in the component characteristics such as color loss and discoloration, surface texture blisters and waviness, and optical distortion. Conventional compression molding methods are incapable of producing a thin-line ring of the current disclosure. The particular method of manufacturing developed in the current disclosure eliminates many of the common problems found in conventional methods of making compression-molded products. The compression molding process described herein achieves a symmetrical inner-band that runs through the entire circumference of the ring. The disclosed compression molding methods include critical steps, specific temperatures, pressures, compression times, material requirements, etc. to achieve a symmetrical inner-band. Without the disclosed process, the edges of the two outer-band halves and the edges of the inner band that could not be controlled or defined by other known methods.

### SUMMARY

This Summary provides an introduction to some general concepts relating to this disclosure in a simplified form that are further described below in the Detailed Description. This Summary is not intended to identify key features or essential features of the disclosure.

Certain aspects of the present invention relate to a unique compression-molded silicon ring, or methods of making such rings. In accordance with one exemplary aspect of the disclosure, an outer-band or a first outer-band half or half of a ring hoop is formed through compression molding. A matching second outer-band half or half of a ring hoop is then formed by compression molding. The outer-band half is placed in a second mold and a spacer-insert mold is placed over the second mold. The spacer-insert mold contains a cavity for each ring template that is filled with a silicone rubber, silicone dough, or silicone shot. A second outer-band half of the ring is placed a third mold. The third mold is placed over the spacer-insert mold. All three-conjoined molds are inserted into a compression chamber. The two outer-band halves are compression molded into a single ring with an inner, thin-line band formed by the spacer-insert mold that was filled with silicone rubber.

A thin-line silicone ring is also described, formed in accordance with the invention. The silicone ring consists of two outer-band halves that are joined to form a single band. The two outer-band halves are separated by a silicone inner band. The silicone inner band is symmetrical throughout the entire circumference of the outer band and is positioned equidistantly in between the two outer-band halves. The inner silicone-band can typically be composed of a grade of material that is the same or different than the outer band, and typically a different color.

### BRIEF DESCRIPTION OF THE DRAWINGS

Exemplary embodiments of the disclosure will now be described by way of example only and with reference to the accompanying drawings, in which:
Figure 1 shows a raised horizontal view of an exemplary embodiment of a compression-molded silicone ring.
Figure 2 shows a front and vertical view of an exemplary embodiment of a compression-molded silicone ring.
Figure 3 shows a top view from directly above an exemplary embodiment of a compression-molded silicone ring.
Figure 4 shows the specific process steps for making an exemplary embodiment of a compression-molded silicone ring.
Figure 5A-5B shows the first compression mold and the formed outer-band halves of an exemplary embodiment of a compression-molded silicone ring.
Figure 6A-6C shows the second compression mold, the spacer-insert mold, and the third compression mold used in the process of manufacturing an exemplary embodiment of a compression-molded silicone ring.
Figure 7 shows an exemplary embodiment of a compression-molded silicone ring prior to the removal of the excess silicone after the outer-band halves and inner silicone-band have been vulcanized together.

### DETAILED DESCRIPTION OF EMBODIMENTS

In the following description of various examples of a compression-molded silicone ring and methods of manufacture in this disclosure, reference is made to the accompanying drawings, which form a part hereof.

It is to be understood that other compression-molded silicone rings and methods of manufacture may be utilized and that structural and functional modifications may be made from the specifically described examples and methods without departing from the scope of the present disclosure. Moreover, the figures of this disclosure may represent the scale and/or dimensions according to one or more embodiments, and as such contribute to the teaching of such dimensional scaling. However, those skilled in the art will readily appreciate that the disclosure herein is not limited to the scales, dimensions, proportions, and/or orientations shown in the figures.

The embodiments and methods described herein provide, *inter alia*, a compression-molded silicone ring and the method of manufacturing. The compression-molded silicone ring is unique and may be used as a substitute to a conventional wedding band. The compression-molded silicone ring provides a safe alternative to individuals with active lifestyles or professions not conducive to the wearing of conventional rings or wedding bands due to the risk of injury to the finger and hand.

The design of the compression-molded silicone ring and associated process of manufacturing result in a ring design that includes a nearly symmetrical inner band or "thin line" that runs through the circumference of the ring. Two outer bands "sandwich" the inner band and results in a visually appealing ring. In one embodiment, the inner band has a different color and/or made from a different grade of silicone rubber than the outer bands. In yet another embodiment, the outer bands are multi-colored and/or made from different grades of silicone rubber.

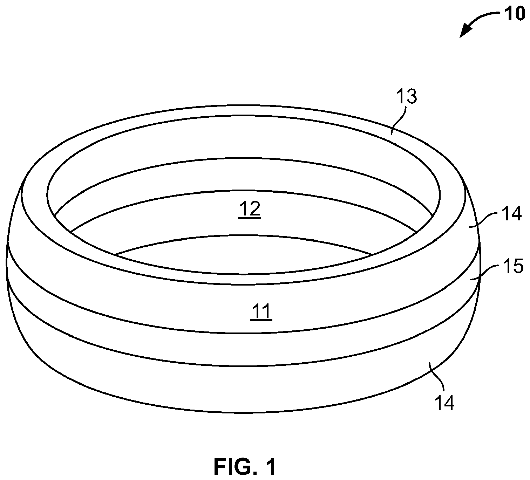

In certain examples, such as the examples of Figures 1, 2, and 3, the compression-molded silicone ring 10 comprises the compression-molded silicone ring includes at least two outer-band halves 14. The first outer-band half 14 and second outer-band half 14 are separated by a silicone inner-band 15. The outer surface 11 of the silicone ring is formed by the outer surfaces of two outer-band halves 14 and the outer surface of the inner-band 15. The inner portions of outer-band halves 14 and inner-band 15 also form the inner surface 12 of the silicone ring. The silicone ring 10 also includes a flat edge 13 that is part of the outside structure of outer-band 14.

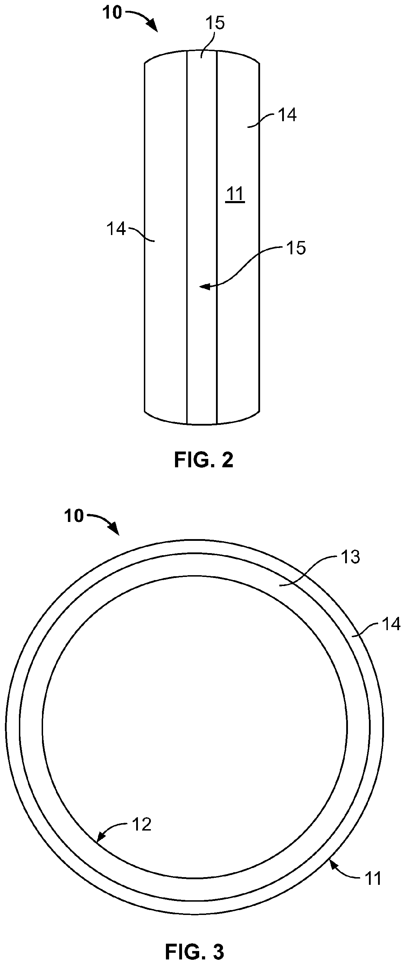

In certain examples, the inner band 15 is positioned between outer-band halves 14, in the exact center of the ring, such that the width of the first outer-band half 14, as seen in Figure 2, is the same width as the second outer-band half 14. In other examples, as seen in Figure 2, the width of inner-band 15 is less than the width of outer-band half 14. In yet other examples, the width of inner-band 15 is greater than the width of outer-band halves 14. In still other examples, the inner-band 15 has the same width of outer-band halves 14. In each example, the uniform inner-band 15 follows or runs the entire circumference of the silicone ring outer-bands 14.

In some examples, the inner-band 15 is a different color than the outer-band halves 14. In other examples, a first outer-band half has a different color than the inner-band half 15, and a different color than the second outer-band half 14. In this embodiment, the silicone ring is composed of three different colors.

Silicone rubber is an elastomer composed of silicone, carbon, hydrogen, and oxygen. Silicone rubbers have a vast amount of uses across various industries and have inherently stable properties. Silicone rubber is non-reactive and are virtually unaffected by weather, can withstand temperatures from roughly -50° Celsius to +250° Celsius. Silicone rubber tends to maintain its flexibility and resilience, is inert with no taste or smell, and can range from transparent to brightly colored. Due to these advantageous properties, silicone rubber has applications in the automotive industry, apparel, medical devices, electronics, the food industry, etc. Various grades of silicone rubber are commercially available such as Medical grade, Food Quality/FDA compliant grades, High-Temperature Vulcanizing (HTV) grade, Room Temperature Vulcanization (RTV) grade, Liquid Silicone Rubber (LSR), 2-Part Silicone Rubber (RTV-2), Silicone Rubber (RTV-1), and silicone gels. HTV is further divided into millable type silicone rubber and liquid type silicone rubber based upon the degree of polymerization. Millable type silicone rubber is generally composed of polyorgarnosilioxan and silica that forms a base compound. The base compound is catalyzed, pigmented, and cured and is readily available as a commercial product. This type of silicone rubber is also known as High Consistency Silicone Rubber (HCR). In certain examples, the outer-band half 14 is composed of a food grade silicone rubber. In other examples, the inner-band 15 is composed of a food-grade silicone rubber. In still other examples, the outer-band halves 14 and the inner-band 15 can be made of any combination of silicone rubbers described above, or silicone rubbers not described or developed yet.

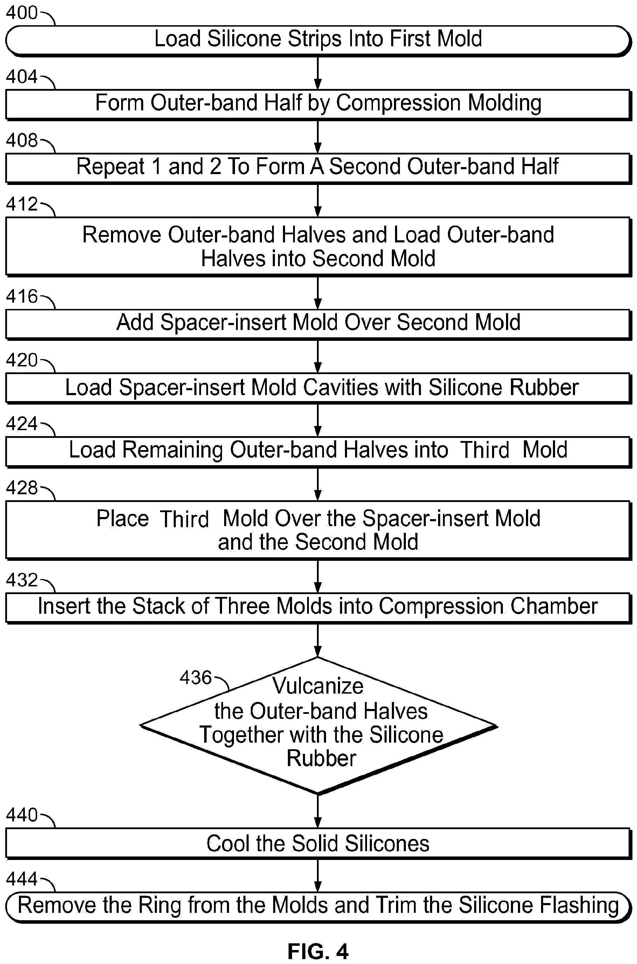

Some aspects of the disclosure relate to a method of manufacturing a silicone ring via compression-molding process. The method takes advantage of the properties of silicone rubber that include fast-curing and low compression set times. Solid silicone rubber is vulcanized in molds by heat and pressure. Figure 4 shows the main steps of the method of manufacturing the compression-molded silicone ring. In one example, food-grade HCR strips are loaded into a first mold 400 that will form the outer-band halves by compression molding in step 404. This is repeated twice as shown by step 408 to produce two outer-band halves that form the compression-molded silicone ring. In one example, the outer-band halves formed by steps 400-408 are made from the same grade of silicone rubber. In another example, a different grade of silicone rubber is used when the second set of outer-band halves are formed in step 408. In certain examples, the color of the outer-band halves are the same. In other examples, the outer-band halves used to form the silicone ring 10 are different colors. Using a different grade of silicone rubber for the two outer-band halves provides further options to alter the texture and/or appearance of the ring.

The outer-band halves are then removed from the first mold and inserted into a second mold as described in step 412. Step 416 requires that a spacer-insert mold, which helps form the inner-band, be placed over the second mold. In step 420 the spacer-insert mold cavities are loaded with silicone rubber, silicone material, or a silicone dough. The remaining outer-band halves are loaded into a third mold in step 424. Step 428 requires that the third mold be placed over the spacer-insert mold and the second mold, and then the stack of three molds is inserted into a compression chamber in step 432. In step 436, the outer-band halves and the inner-band silicone rubber are vulcanized together and then cooled in step 440. The finished silicone ring is removed from the molds in step 444 and any excess silicone material or flash is trimmed from the final product.

Each cavity in the compression molds are individually filled with a precisely weighed amount of silicone rubber or preloaded with strips or pieces of silicone rubber. The compression presses, generally, are hydraulically operated and heated with steam or electrically. Temperature of the mold during the vulcanization process plays a critical role in properly forming the silicone ring. High temperatures are required to minimize the vulcanization time, but temperatures that are too high can result in the "scorching" of the silicone rubber. The vulcanization time is determined by the temperature of the selected silicone material, size or thickness of the component being produced, and the temperature of the molds.

In certain examples, various ring sizes are produced by the methods of the current disclosure and require a variable amount of silicone rubber to produce the outer-band half. The desired thickness of the outer-band half will also determine the amount of silicone rubber required. In one example, 1.00-1.25 grams of silicone rubber are used to form the outer-band half. In other examples, 0.75-1.50 grams of silicone rubber are used to form the outer-band half. In yet another example, 0.50-1.75 grams of silicone rubber are used to form the outer-band half. In still another example, 0.25-3.25 grams of silicone rubber are used to form the outer-band half.

Different amounts of silicone rubber are required due to the various ring sizes that are produced by the methods of the current disclosure. The desired thickness of the outer-band halves will also determine the amount of silicone rubber required in the current method. Additionally, different amounts of silicone rubber are required to produce the inner-band, depending upon the ring size as well as the desired thickness of the inner band. In one example, 2-2.5 grams of silicone rubber are used to fill the spacer-insert mold cavities. In other examples, 1.75-2.75 grams of silicone rubber are used to fill the spacer-insert mold cavities. In yet another example, 1.5-3.0 grams of silicone rubber are used to fill the spacer-insert mold cavities. In still another example, 1.0-4.0 grams of silicone rubber are used to fill the spacer-insert mold cavities.

Non-uniform heating and temperatures that are too high commonly lead to blistered compression-molded products, an overly thick flash, dull and clouded color, warped structures, undefined borders, and bleeding colors. Molds that are too cold can also result in blistered components or dull finishes. In certain examples, in an effort to eliminate flaws due to inadequate process temperatures, the compression molds are heated to 200° Celsius in the vulcanization process. In other examples, the molds are heated from 190° Celsius to 210° Celsius. In yet another example, the molds are heated from 185° Celsius to 215° Celsius. In one example, the molds are heated from 175° Celsius to 225° Celsius.

Insufficient compression time or mold cycles can result in blistering, uncured silicone, and warping. To prevent flaws in the components as a result of incorrect compression times or mold cycles, in one example, the mold compression time is 3 minutes. In other examples, the mold compression time is between 2.5 and 3.5 minutes. In yet another example, the mold compression time is between 2.0 and 4.0 minutes. In still another example, the mold compression time is between 0.5 and 5.0 minutes.

Blistering, surface clouding, color segregation, and weak components can result from improper compression pressures. To eliminate problems associated with improper compression pressures, in one example, the mold compression pressure to form the outer-band half is 200 kg/cm². In other examples, the mold compression pressure to form the outer-band half is between 175 kg/cm² and 225 kg/cm². In yet another example, the mold compression pressure to form the outer-band half is between 150 kg/cm² and 250 kg/cm². In still another example, the mold compression pressure to form the outer-band half is between 125 kg/cm² and 275 kg/cm². In one example, the mold compression pressure to form the outer-band half is between 100 kg/cm² and 300 kg/cm².

As discussed above, to eliminate problems associated with improper compression pressures, the mold compression pressure to form the inner-band in one example is 120 kg/cm2. In other examples, the mold compression pressure to form the inner-band is between 110 kg/cm2 and 130 kg/cm². In yet another example, the mold compression pressure to form the inner-band is between 100 kg/cm² and 150 kg/cm². In still another example, the mold compression pressure to form the inner-band is between 50 kg/cm² and 200 kg/cm².

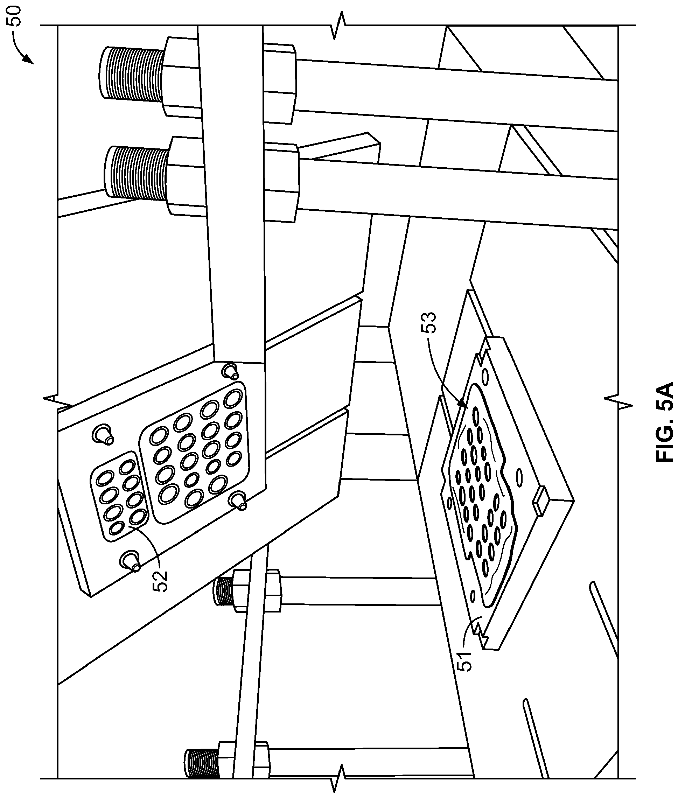

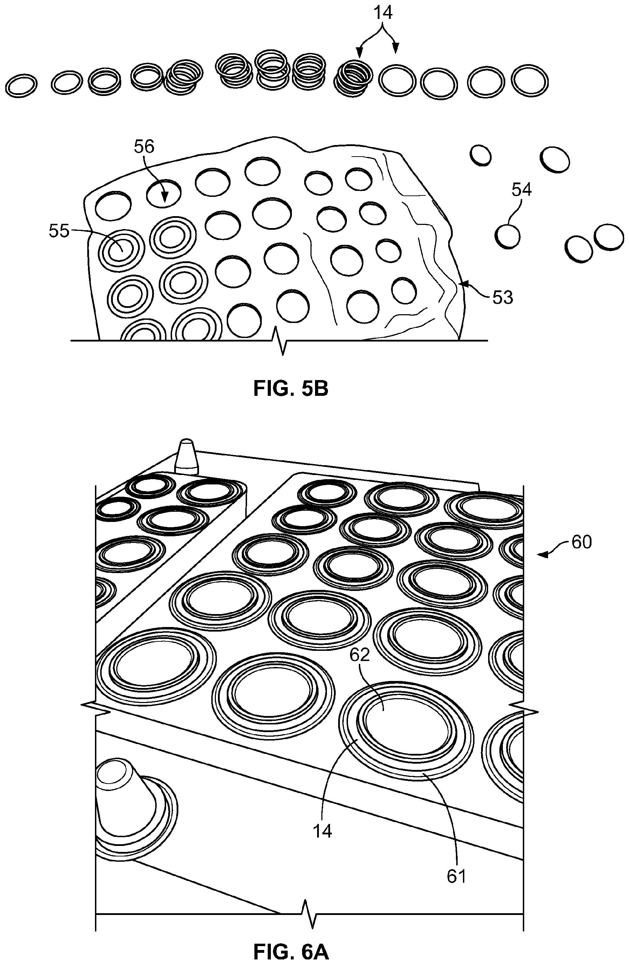

In some exemplary embodiments, such as the exemplary embodiment of Figure 5A, a first compression mold 50 of the method of manufacturing is depicted. The compression mold 50 includes a base plate 51 and top plate press 52. In one example, silicone strips are loaded into the first compression mold 50 that will form a first set of outer-band halves by compression molding. Silicone rubber or silicone material 53 is loaded on the base plate 51 of the first compression mold 50. A first set of outer-band halves are formed by compressing the top plate press 52 with the base plate 51. After vulcanization, the first set of outer-band halves 14 are removed from the first compression mold 50. This step is repeated to produce a second set of outer-band halves that will later be used with the first set of outer-band halves to form the compression-molded silicone rings. Figure 5B shows the outer-band halves removed from the excess silicone material 53, 54, and 55. When an outer-band half 14 is removed from the excess silicone material 53, 54, and 55 a void 56 remains in the remaining excess silicone material 53. Excess silicone material 53, 54, and 55 is discarded or recycled.

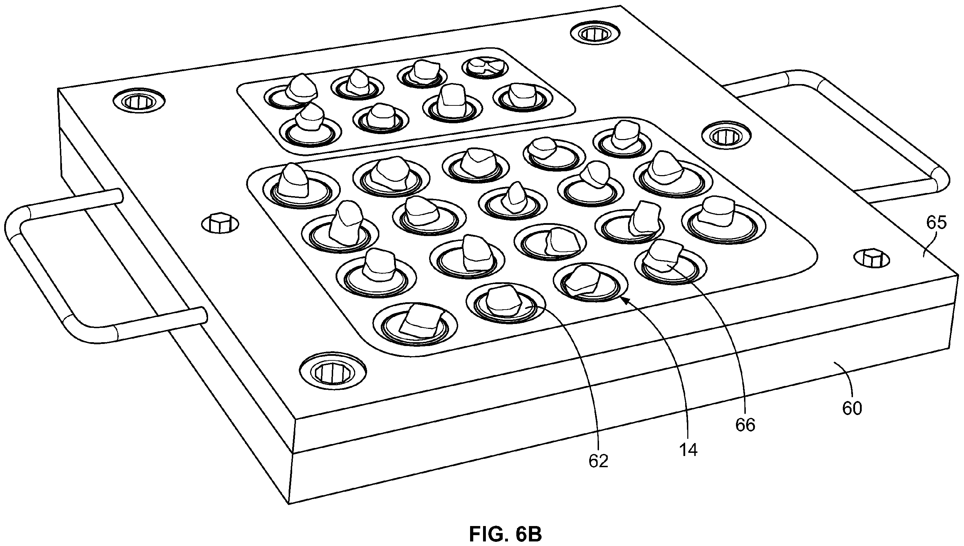

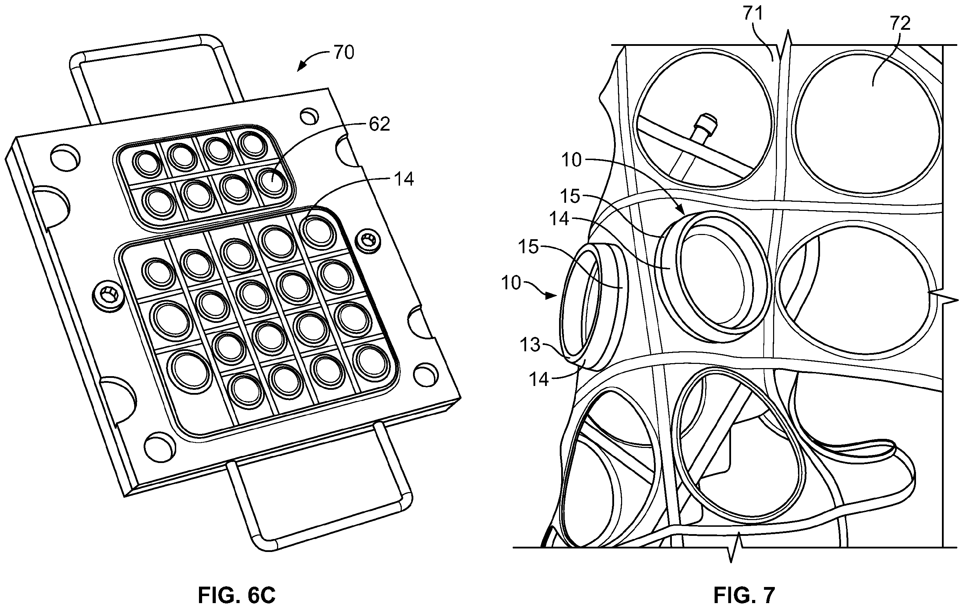

As shown in Figure 6A, after removal from the first compression mold 50, the outer-band halves 14 are inserted into a second compression mold plate 60. In particular, as shown in Figure 6A, the outer-band halves 14 are loaded in mold cavities 61 in the second compression mold plate 60. The next step requires that a further compression mold plate, referred to as a spacer-insert mold plate 65 be placed over the second compression mold plate 60. Figure 6B depicts spacer-insert mold plate 65 on top of the second compression mold plate 60. As shown in Figure 6B, silicone rubber, silicone material, or a silicone dough 66, which will form the inner-band of the silicone ring, is then loaded onto cavity platforms 62. Also shown in Figure 6B are the outer-band halves 14 resident in the second compression mold plate 60. The remaining outer-band halves 14 are loaded into a third said compression mold plate 70. Figure 6C depicts the third compression mold plate 70 loaded with outer-band halves 14. The third mold plate 70 is then placed over the spacer-insert mold plate 65 and the second compression mold plate 60. The stack of three mold plates is then inserted into a compression chamber at a predetermined heat, pressure, and for a specific length of time. The outer-band halves and the inner-band silicone rubber are vulcanized together and then cooled. The finished silicone ring is removed from the molds and any excess silicone material or flash is trimmed from the final product. The final product is the compression-molded silicone ring 10 as depicted in Figure 7. The silicone ring 10 is removed from the mold leaving void 72 in the excess silicone 71. The excess silicone or flash 71 is trimmed from ring. The finished product includes the two outer-band halves 14 with a center thin-line inner-band 15.

The current disclosure describes a unique method of manufacturing a distinctly multi-colored product from compression-molding of silicone rubber. By using various molds outlined in the example above, a silicone ring with a colored inner band is manufactured. Conventional compression molding techniques cannot be used to create a multicolored silicone ring or other object with distinct and defined colors within the completed product. In conventional methods, when different-colored or pigmented silicone rubbers are compressed together, a blurred or "tie dye" type color pattern emerges as a result of the heat and compression. In one example of the current disclosure, the method of manufacturing a compression-molded silicone ring produces a multi-colored ring with a distinct separation of colors.

The unique compression-molded silicon rings, or methods of making such rings include rings sized in accordance with United States size specifications based upon the ring inner circumference.

These process descriptions are merely exemplary. In certain embodiments, the process may include additional combinations or substitutions of some or all of the steps described above. Moreover, additional and alternative suitable variations, forms and components for the process will be recognized by those skilled in the art given the benefit of this disclosure.

## Claims

1. A method of manufacturing a silicone ring (10) via compression molding comprising:
forming a first outer-band half (14) of a silicone ring (10) and a second outer-band half (14) of a silicone ring (10) with a first compression mold (50) containing a base plate (51) and a top plate press (52);
placing the first outer-band half (14) of the silicone ring (10) in a second compression mold (60);
placing a spacer-insert mold (65) over the second compression mold (60);
placing a silicone rubber (66) through a cavity in the spacer-insert mold (65) and onto a cavity platform (62) on the second mold (60);
placing the second outer-band half (14) of the rings in a third mold (70);
placing the third mold (70) over the spacer-insert mold (65);
inserting the second mold (60), the spacer-insert mold (65), and the third mold (70) into a compression chamber, wherein the silicone rubber is compression molded and vulcanized to form an inner-band (15), and the first and second outer-band halves (14) form a complete silicone ring (10), and a symmetrical inner-band (15) is formed in between the first and second outer-band halves (14).

2. The method of claim 1, wherein the pressure used in the molding process to form the inner band is about 120 kg/cm².

3. The method of claim 1, wherein the pressure used in the molding process to form the outer-band half is about 200 kg/cm².

4. The method of claim 1, wherein the molds (60, 65, 70) are heated to at least 200 degrees Celsius.

5. The method of claim 1, wherein the molds (60, 65, 70) are compressed for at least three minutes.

6. The method of claim 1, wherein the first and second outer-band halves (14) are composed of a food grade silicone rubber.

7. The method of claim 1, wherein the symmetrical inner-band (15) is composed of a food grade silicone rubber.

8. The method of claim 7, wherein the silicone rubber of the inner band (15) is a different color than the silicone rubber of the first and second outer-band halves (14).

9. The method of claim 1, wherein at least 1.0 grams of silicone rubber are used to form the first outer-band half (14) and at least 1.0 grams of silicone rubber are used to form the second outer-band half (14).

10. The method of claim 1, wherein at least 2.0 grams of silicone rubber are inserted through each cavity of the spacer-insert mold (65) to form the inner-band half (15).

11. The method of claim 1, wherein an excess silicone is removed from the complete ring (10).

12. The method of claim 1, wherein the silicone of the inner-band (15) is a different grade of silicone rubber than the silicone of the outer-band halves (14).

## Patentansprüche

1. Verfahren zur Herstellung eines Silikonrings (10) durch Formpressen, Folgendes umfassend:
das Bilden einer ersten Außenschienenhälfte (14) eines Silikonrings (10) und einer zweiten Außenschienenhälfte (14) eines Silikonrings (10) mit einer ersten Pressform (50), die eine Grundplatten- (51) und eine Deckplattenpresse (52) enthält;
das Platzieren der ersten Außenschienenhälfte (14) des Silikonrings (10) in eine zweite Pressform (60);
das Platzieren einer Abstandshaltereinsatzform (65) über der zweiten Pressform (60);
das Platzieren eines Silikongummis (66) durch einen Hohlraum in der Abstandshaltereinsatzform (65) und auf eine Hohlraumplattform (62) auf der zweiten Form (60);
das Platzieren der zweiten Außenschienenhälfte (14) der Ringe in eine dritte Form (70);
das Platzieren der dritten Form (70) über der Abstandshaltereinsatzform (65);
das Einsetzen der zweiten Form (60), der Abstandshaltereinsatzform (65) und der dritten Form (70) in eine Kompressionskammer, wobei der Silikongummi formgepresst und vulkanisiert wird, um eine Innenschiene (15) zu bilden, und die ersten und zweiten Außenschienenhälften (14) einen vollständigen Silikonring (10) bilden, und eine symmetrische Innenschiene (15) zwischen der ersten und zweiten Außenschienenhälfte (14) ausgebildet ist.

2. Verfahren nach Anspruch 1, wobei der Druck, der in dem Formungsprozess verwendet wird, um die Innenschiene zu bilden, etwa 120 kg/cm² beträgt.

3. Verfahren nach Anspruch 1, wobei der Druck, der in dem Formungsprozess verwendet wird, um die Außenschienenhälfte zu bilden, etwa 200 kg/cm² beträgt.

4. Verfahren nach Anspruch 1, wobei die Formen (60, 65, 70) auf mindestens 200 Grad Celsius erhitzt werden.

5. Verfahren nach Anspruch 1, wobei die Formen (60, 65, 70) mindestens drei Minuten lang zusammengedrückt werden.

6. Verfahren nach Anspruch 1, wobei die erste und die zweite Außenschienenhälfte (14) aus einem lebensmittelechten Silikongummi bestehen.

7. Verfahren nach Anspruch 1, wobei die symmetrische Innenschiene (15) aus einem lebensmittelechten Silikongummi besteht.

8. Verfahren nach Anspruch 7, wobei der Silikongummi der Innenschiene (15) eine andere Farbe als der Silikongummi der ersten und zweiten Außenschienenhälfte (14) hat.

9. Verfahren nach Anspruch 1, wobei mindestens 1,0 Gramm Silikongummi verwendet wird, um die erste Außenschienenhälfte (14) zu bilden, und mindestens 1,0 Gramm Silikongummi verwendet wird, um die zweite Außenschienenhälfte (14) zu bilden.

10. Verfahren nach Anspruch 1, wobei mindestens 2,0 Gramm Silikongummi durch jeden Hohlraum der Abstandshaltereinsatzform (65) eingesetzt werden, um die Innenschienenhälfte (15) zu bilden.

11. Verfahren nach Anspruch 1, wobei ein überschüssiges Silikon aus dem gesamten Ring (10) entfernt wird.

12. Verfahren nach Anspruch 1, wobei das Silikon der Innenschiene (15) einen anderen Silikongummi-Härtegrad aufweist als das Silikon der Außenschienenhälften (14).

## Revendications

1. Procédé de fabrication d'un anneau en silicone (10) par moulage par compression comprenant :
la formation d'une première moitié de bande externe (14) d'un anneau en silicone (10) et d'une seconde moitié de bande externe (14) d'un anneau en silicone (10) avec un premier moule de compression (50) contenant une plaque de base (51) et une presse à plaque supérieure (52) ;
la mise en place de la première moitié de bande externe (14) de l'anneau en silicone (10) dans un deuxième moule de compression (60) ;
la mise en place d'un moule d'insertion d'entretoise (65) sur le deuxième moule de compression (60) ;
la mise en place d'un caoutchouc de silicone (66) à travers une cavité dans le moule d'insertion d'entretoise (65) et sur une plate-forme de cavité (62) sur le deuxième moule (60) ;
la mise en place de la seconde moitié de bande externe (14) des anneaux dans un troisième moule (70) ;
la mise en place du troisième moule (70) sur le moule d'insertion d'entretoise (65) ;
l'insertion du deuxième moule (60), du moule d'insertion d'entretoise (65) et du troisième moule (70) dans une chambre de compression, le caoutchouc de silicone étant moulé par compression et vulcanisé afin de former une bande interne (15), et les première et seconde moitiés de bande externe (14) formant un anneau de silicone complet (10), et une bande interne symétrique (15) étant formée entre la première et la seconde moitiés de bande externe (14).

2. Procédé selon la revendication 1, dans lequel la pression utilisée dans le processus de moulage pour former la bande intérieure est d'environ 120 kg/cm².

3. Procédé selon la revendication 1, dans lequel la pression utilisée dans le processus de moulage pour former la moitié extérieure de la bande est d'environ 200 kg/cm².

4. Procédé selon la revendication 1, dans lequel les moules (60, 65, 70) sont chauffés à au moins 200 degrés Celsius.

5. Procédé selon la revendication 1, dans lequel les moules (60, 65, 70) sont comprimés pendant au moins trois minutes.

6. Procédé selon la revendication 1, dans lequel les première et seconde moitiés de bande extérieure (14) sont composées d'un caoutchouc de silicone de qualité alimentaire.

7. Procédé selon la revendication 1, dans lequel la bande intérieure symétrique (15) est composée d'un caoutchouc de silicone de qualité alimentaire.

8. Procédé selon la revendication 7, dans lequel le caoutchouc de silicone de la bande intérieure (15) est d'une couleur différente du caoutchouc de silicone des première et seconde moitiés de bande extérieure (14).

9. Procédé selon la revendication 1, dans lequel au moins 1,0 gramme de caoutchouc de silicone est utilisé pour former la première moitié de bande externe (14) et au moins 1,0 gramme de caoutchouc de silicone est utilisé pour former la seconde moitié de bande externe (14).

10. Procédé selon la revendication 1, dans lequel au moins 2,0 grammes de caoutchouc de silicone sont insérés à travers chaque cavité du moule d'insertion d'entretoise (65) pour former la moitié interne de la bande (15).

11. Procédé selon la revendication 1, dans lequel un excès de silicone est retiré de l'anneau complet (10).

12. Procédé selon la revendication 1, dans lequel la silicone de la bande interne (15) est un caoutchouc de silicone de qualité différente de celle de la silicone des moitiés de bande externe (14).
